# EUROPÄISCHE PATENTSCHRIFT

(11) **EP 3 524 843 B1**
(45) Veröffentlichungstag und Bekanntmachung des Hinweises auf die Patenterteilung: **22.09.2021**
(21) Anmeldenummer: 18156450.1
(22) Anmeldetag: 13.02.2018
(51) Int. Cl.: F16D 65/12, B22C 9/10, B22D 19/16

(54) **VERFAHREN ZUR HERSTELLUNG EINES VERBUNDGUSSTEILS UND VERBUNDGUSSTEIL**
METHOD FOR PRODUCING A COMPOSITE CAST PART AND COMPOSITE CAST PART
PROCÉDÉ DE FABRICATION D'UNE PIÈCE MOULÉE COMPOSITE ET PIÈCE MOULÉE COMPOSITE

(43) Veröffentlichungstag der Anmeldung: 14.08.2019
(73) Patentinhaber: Johann Grohmann GmbH & Co. KG, 72406 Bisingen (DE)
(72) Erfinder: Grohmann, Wolfgang, 72379 Hechingen (DE)
(74) Vertreter: Kohler Schmid Möbus Patentanwälte

(56) Entgegenhaltungen:
- EP-A2- 1 227 261
- EP-A2- 1 892 434
- WO-A1-2011/061346
- WO-A1-2013/127896
- US-A- 5 823 303
- US-B1- 6 338 812

## Beschreibung

Die Erfindung betrifft ein Verfahren zur Herstellung eines Verbundgussteils und eine Verbundbremsscheibe.

Die Herstellung eines Verbundgussteils, insbesondere einer Verbundbremsscheibe, ist beispielsweise aus der DE 10 2010 049 334 A1 bekannt.

Dabei wird üblicherweise zunächst ein erstes Teil des Verbundgussteils, insbesondere ein Reibring einer Bremsscheibe, gefertigt. Ein an dem Reibring befestigtes Verbindungselement wird anschließend mit einem zweiten Material, welches einen geringeren Schmelzpunkt aufweist als das erste Material, umgossen. Die Herstellung eines solchen Verbundgussteils läuft herkömmlicherweise so ab, dass zunächst der Reibring in einem Gießverfahren hergestellt und bearbeitet wird. Insbesondere müssen Löcher zum Einstecken von Verbindungselementen gebohrt werden.

Anschließend wird der Reibring häufig zu einem anderen Unternehmen transportiert, wo das zweite Teil an Verbindungselemente angegossen wird. Anschließend ist eine erneute Bearbeitung notwendig. Insbesondere, wenn es sich bei dem ersten Teil des Verbundgussteils um eine ringförmige Scheibe handelt, ist es wegen des begrenzten Arbeitsraums erschwert, die Verbindungselemente automatisiert in die Innenseite dieses Rings einzustecken, ehe das zweite Teil mit niedrigerem Schmelzpunkt angegossen wird. Die Herstellung eines Verbundgussteils, insbesondere einer Verbundbremsscheibe, ist daher sehr zeit- und arbeitsintensiv.

Aus der EP 1 227 261 A2 ist eine innenbelüftete Bremsscheibe bekannt, wobei ein Tragteil mit darin befestigten Hohlstiften in eine Gießform eingelegt wird und anschließend die Bremsringe mit Verbindungsstegen aus einer Graugusslegierung gegossen werden, wobei die Hohlstifte umgossen werden.

Aus der US 5,823,303 A ist eine Verbundbremsscheibe bekannt, wobei ein Verbindungselement formschlüssig in einem Bremstopf angeordnet ist und ein Reibring relativ beweglich zu dem Verbindungselement angeordnet ist.

Aufgabe der vorliegenden Erfindung ist es, ein Verfahren zur Herstellung eines Verbundgussteils und eine Verbundbremsscheibe bereitzustellen, die eine deutlich vereinfachte Herstellung ermöglichen.

Gelöst wird diese Aufgabe erfindungsgemäß durch ein Verfahren zur Herstellung eines Verbundgussteils mit den Merkmalen des Patentanspruchs 1.

Die Herstellungsreihenfolge wird daher im Vergleich zum Stand der Technik umgekehrt. Zunächst wird das erste Teil aus einem Werkstoff mit einem geringeren Schmelzpunkt hergestellt. Insbesondere, wenn es sich bei dem Verbundgussteil um eine Bremsscheibe handelt, ist es nun möglich, den Bremstopf, d. h. das Teil mit dem niedrigeren Schmelzpunkt, zuerst herzustellen. Überraschenderweise ist es möglich, das zweite Teil, das einen höheren Schmelzpunkt aufweist, an das Verbindungselement anzugießen, ohne dass dabei das erste Teil aus einem Werkstoff mit einem niedrigeren Schmelzpunkt beschädigt oder verformt wird. Die Verbindungselemente können bei dieser Vorgehensweise automatisiert an dem ersten Teil angebracht werden, da ausreichend Arbeitsraum zur Verfügung steht.

Besondere Vorteile ergeben sich, wenn das erste Teil durch Gießen, insbesondere Pressgießen oder Druckguss, Warmpressen oder Stanzen hergestellt wird. Bei der Herstellung des ersten Teils ist man somit nicht mehr auf das Gießen beschränkt. Es stehen auch andere Möglichkeiten zur Verfügung, das erste Teil herzustellen. Insbesondere kann auf diese Art und Weise das kostengünstigste Herstellungsverfahren für die Herstellung des ersten Teils verwendet werden.

In dem ersten Teil kann zumindest eine Öffnung erzeugt werden und das Verbindungselement kann in die Öffnung eingesteckt werden. Die Öffnung kann beispielsweise durch Bohren oder Fräsen in dem ersten Teil erzeugt werden. Weiterhin ist es denkbar, dass die Öffnung schon bei der Herstellung, insbesondere beim Gießen des ersten Teils, durch einen Platzhalter geschaffen wird. Insbesondere, wenn die Öffnung gebohrt oder gefräst wird, ist auch dies automatisiert und effektiv möglich, während es bei dem herkömmlichen Verfahren kostenintensiv war, entsprechende Bohrungen in den Reibring einzubringen.

Um die Relativbewegung des Verbindungselements bezüglich des ersten Teils zu erleichtern, kann zunächst eine Hülse in die Öffnung eingesteckt werden und anschließend das Verbindungselement in die Hülse eingesteckt werden. Die Hülse kann dabei aus einem dritten Material, beispielsweise Edelstahl, hergestellt sein.

Um das Einstecken des Verbindungselements und/oder der Hülse zu erleichtern, kann vorgesehen sein, dass das Einstecken unter Erwärmung des ersten Teils erfolgt. Die Erwärmung kann induktiv oder mittels eines Gasbrenners erfolgen.

Eine Verfahrensvariante zeichnet sich dadurch aus, dass das Verbindungselement zumindest teilweise in das erste Teil eingegossen wird. In diesem Fall ist es nicht notwendig, Öffnungen in dem ersten Teil zu erzeugen. Allerdings ist die Positioniergenauigkeit des Verbindungselements im ersten Teil bei dieser Vorgehensweise geringer.

Das zumindest eine Verbindungselement wird erwärmt, ehe Schritt c. durchgeführt wird. Die Erwärmung des Verbindungselements kann beispielsweise induktiv oder mittels eines Gasbrenners erfolgen. Die Erwärmung des Verbindungselements hat den Vorteil, dass der Temperaturunterschied zwischen dem fluiden zweiten Material und dem Verbindungsteil währen des Schritts c. geringer ist. Dadurch kann ein Abschrecken des zweiten Materials vermieden werden.

Das Verbindungselement kann aus einem Material hergestellt sein, das einen höheren Schmelzpunkt als das erste und das zweite Material aufweist. Dadurch kann vermieden werden, dass das Material des Verbindungselements schmilzt, während das zweite Material angegossen wird. Beispielsweise kann das Verbindungselement aus Edelstahl ausgebildet sein. Das Verbindungselement und eine ggf. vorhandene Hülse können aus dem gleichen Material oder aus unterschiedlichen Materialien ausgebildet sein. Insbesondere kann es sich bei dem ersten Material um eine Aluminiumlegierung und bei dem zweiten Material um Gusseisen (Grauguss) handeln.

In den Rahmen der Erfindung fällt außerdem eine Verbundbremsscheibe mit den Merkmalen des Patentanspruchs 8. Bei Verbundbremsscheiben des Standes der Technik ist das Verbindungselement formschlüssig in dem Material angeordnet, welches den niedrigeren Schmelzpunkt aufweist. Das Verbindungselement ist somit formschlüssig an dem Bremstopf angeordnet, während es verschiebbar in einem Reibring angeordnet ist, wobei der Reibring aus einem Material mit höherem Schmelzpunkt hergestellt ist. Dadurch ist es möglich, dass bei Temperaturänderungen und unterschiedlichen Ausdehnungen des Bremstopfs und des Reibrings eine Ausgleichsbewegung stattfinden kann. Bei dem erfindungsgemäßen Verbundgussteil, insbesondere bei einer erfindungsgemäßen Verbundbremsscheibe, ist das Verbindungselement formschlüssig in dem Material mit dem höheren Schmelzpunkt, welches später hergestellt wird, angeordnet. Eine Ausgleichsbewegung findet dann dadurch statt, dass das Verbindungselement relativ zu dem ersten Teil bewegbar angeordnet ist, insbesondere das Verbindungselement in einem Bremstopf verschiebbar angeordnet ist. Ein solches Verbundgussteil ist einfacher herstellbar als ein Verbundgussteil des Standes der Technik.

Das Verbindungselement, welches als Verbindungsstift ausgebildet sein kann, kann aus einem dritten Material hergestellt sein, welches einen höheren Schmelzpunkt als das zweite Material aufweist. Beispielsweise kann das Verbindungselement aus Edelstahl ausgebildet sein.

Das Verbindungselement ist verschiebbar am ersten Teil angeordnet. Dadurch können temperaturbedingte Ausgleichsbewegungen durchgeführt werden.

In dem ersten Teil kann eine Hülse angeordnet sein, in die das Verbindungselement eingesteckt ist. Dadurch können Relativbewegungen des Verbindungselements relativ zum ersten Teil erleichtert werden. Auch das Einstecken des Verbindungselements während der Herstellung der Verbundbremsscheibe kann durch eine Hülse erleichtert werden.

Das Verbindungselement kann eine Formschlusskontur aufweisen, die von dem zweiten Teil zumindest teilweise hintergriffen ist. Beispielsweise kann das Verbindungselement einen verdickten Abschnitt, beispielsweise einen ringförmigen Abschnitt, aufweisen, der von dem zweiten Material umschlossen wird. Weiterhin ist es denkbar, dass das Verbindungselement eine Ausnehmung, beispielsweise eine Ringnut, aufweist, die Material des zweiten Teils aufnehmen kann, sodass auch auf diese Art und Weise das Verbindungselement formschlüssig im zweiten Material gehalten ist.

Die Verbundbremsscheibe, insbesondere das erste Teil, kann ein weiteres Anbauteil, insbesondere einen Handbremsring, aufweisen. Dabei kann das erste Teil an dem Anbauteil, z. B. mittels Verbindungselementen, befestigt werden, ehe das zweite Material angegossen wird. Das Anbauteil kann aus dem zweiten oder einem anderen Material hergestellt sein. Insbesondere kann das Anbauteil als Graugussteil ausgebildet sein.

Weitere Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine Draufsicht auf ein Verbundgussteil;
- Fig. 2: eine Schnittdarstellung gemäß der Linie II-II der Fig. 1;
- Fig. 3: einen vergrößerten Ausschnitt der Fig. 2 gemäß III;

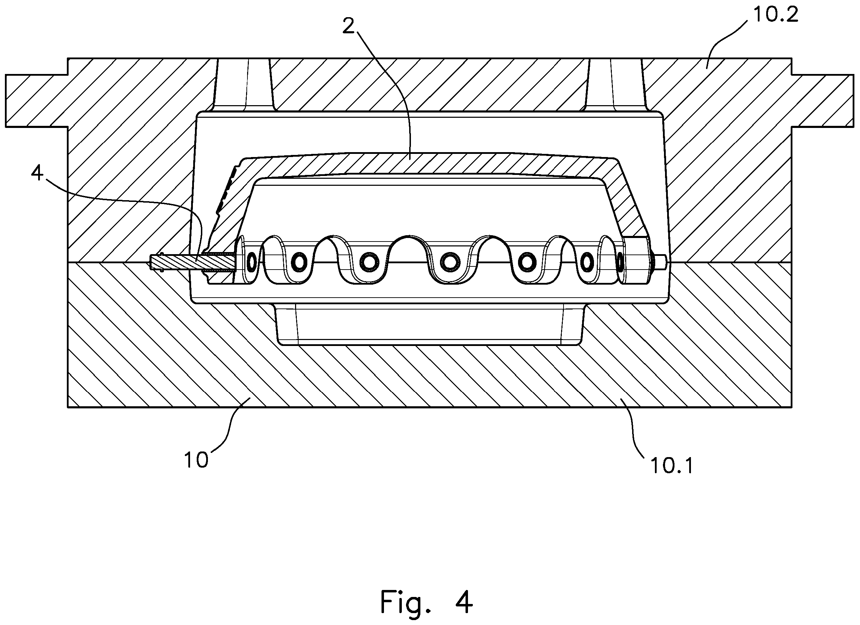

- Fig. 4: eine Schnittdarstellung durch einen Kernkasten mit eingelegtem ersten Teil und Verbindungselement;
- Fig. 5: den Kernkasten gemäß Fig. 4 mit einem Sandkern als Gussform;
- Fig. 6: eine Schnittdarstellung durch den Sandkern mit eingebettetem erstem Teil;
- Fig. 7: eine Sandform mit eingelegtem Sandkern;
- Fig. 8: eine Sandform mit gegossenem zweitem Teil.

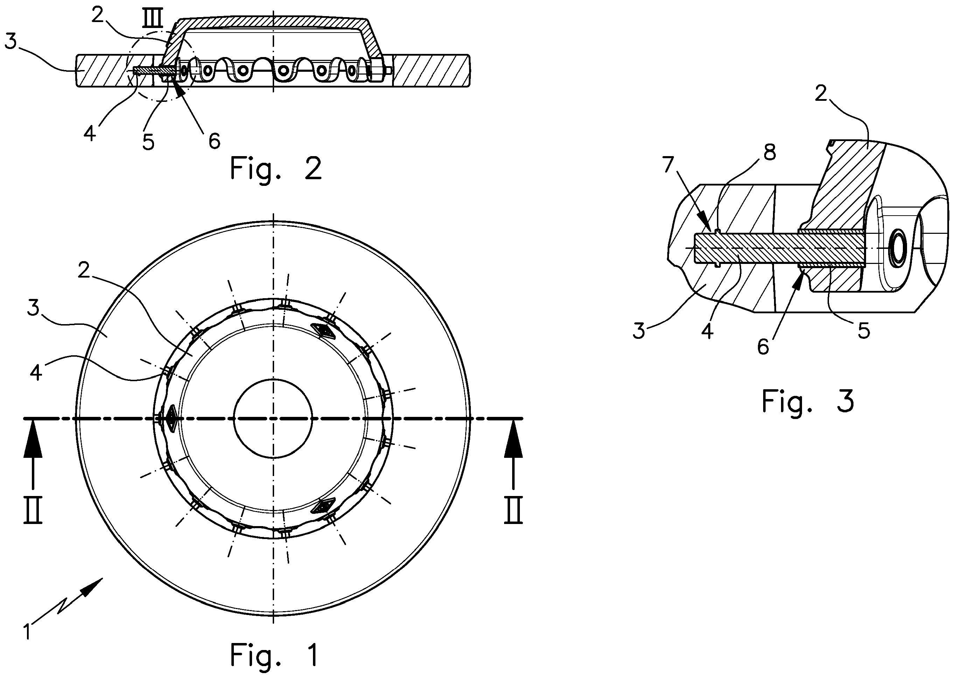

Fig. 1 zeigt eine Draufsicht auf ein als Verbundbremsscheibe ausgebildetes Verbundgussteil 1 mit einem ersten Teil 2 aus einem ersten Material und einem zweiten Teil 3 aus einem zweiten Material, wobei das Material des zweiten Teils 3 einen höheren Schmelzpunkt aufweist als das Material des ersten Teils 2. Das erste Teil 2 ist im gezeigten Ausführungsbeispiel als Bremstopf aus einer Aluminiumlegierung ausgebildet, während das zweite Teil 3 im gezeigten Ausführungsbeispiels als Reibring aus einem Graugussmaterial hergestellt ist. Das zweite Teil 3 und das erste Teil 2 sind über Verbindungselemente 4 miteinander verbunden.

Der Schnittdarstellung gemäß Fig. 2 und dem vergrößerten Ausschnitt gemäß Fig. 3 lässt sich entnehmen, dass die Verbindungselemente 4 formschlüssig in dem zweiten Teil 3 festgelegt sind, während sie relativ zum ersten Teil 2 gleitend bewegbar sind. Da das erste und das zweite Teil 2, 3 aus unterschiedlichen Materialien hergestellt sind, weisen sie auch unterschiedliche Wärmeausdehnungskoeffizienten auf. Bei einer Erwärmung des Verbundgussteils 1 könnte es daher zu Spannungen zwischen dem ersten und dem zweiten Teil 2, 3 kommen. Um die unterschiedlichen Wärmeausdehnungen zu kompensieren bzw. aufzunehmen, ist das Verbindungselement 4 relativ zum ersten Teil 2 bewegbar angeordnet. Insbesondere ist im gezeigten Ausführungsbeispiel das Verbindungselement 4 in einer Hülse 5 gleitend angeordnet. Die Hülse 5 kann über eine Presspassung in dem ersten Teil 2 gehalten sein. Die Hülse 5 ist jedoch nicht zwingend notwendig. Es ist ebenso denkbar, dass das Verbindungselement 4 ohne Hülse 5 in einer Öffnung 6 des ersten Teils 2 angeordnet ist. Die Öffnung 6 kann beispielsweise durch Bohren erzeugt werden.

Damit das Verbindungselement 4 formschlüssig in dem zweiten Teil 3 gehalten ist, weist dieses einen Formschlussabschnitt 7 auf, der im gezeigten Ausführungsbeispiel als ringförmige Erhebung 8 ausgebildet ist. Dadurch wird das Verbindungselement 4 von dem Material des zweiten Teil 3 formschlüssig umgeben und hintergriffen.

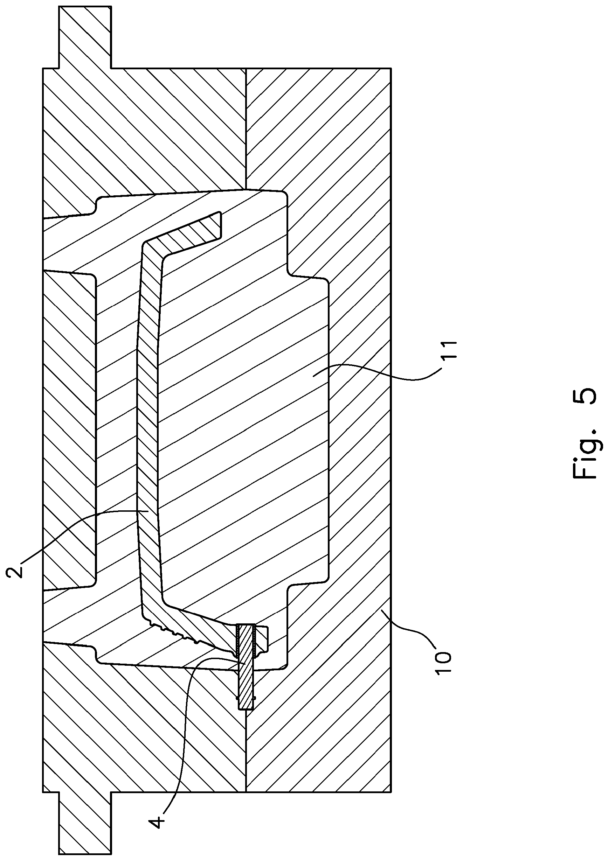

In den folgenden Figuren wird die Herstellung des Verbundgussteils 1 beschrieben. Zunächst wird das erste Teil 2 hergestellt und werden die Öffnungen 6 in das erste Teil 2 eingebracht. Dabei kann das erste Teil 2 auf unterschiedliche Weisen hergestellt werden, beispielsweise mittels Stanzen oder Gießen. Nach der Herstellung des ersten Teils 2 werden die Hülsen 5 und anschließend die Verbindungselemente 4 eingesteckt. Die so geschaffene Anordnung wird in einen Kernkasten 10 eingesetzt, der eine untere Hälfte 10.1 und eine obere Hälfte 10.2 aufweist. Der Kernkasten 10 weist eine den Verbindungselementen 4 entsprechende Kontur auf, sodass diese durch den Kernkasten 10 exakt relativ zum ersten Teil 2 positioniert werden. Anschließend wird der Kernkasten 10, wie sich aus der Fig. 5 ergibt, mit Sand gefüllt, um auf diese Art und Weise eine Gussform zu schaffen. In dem Kernkasten 10 wird demnach ein Sandkern 11 mit Formsand erzeugt. Der Formsand kann unter Druck in den Kernkasten eingebracht werden. Der Formsand kann ein anorganisches oder organisches Bindersystem aufweisen, sodass die Form des Sandkerns 11 fixiert ist.

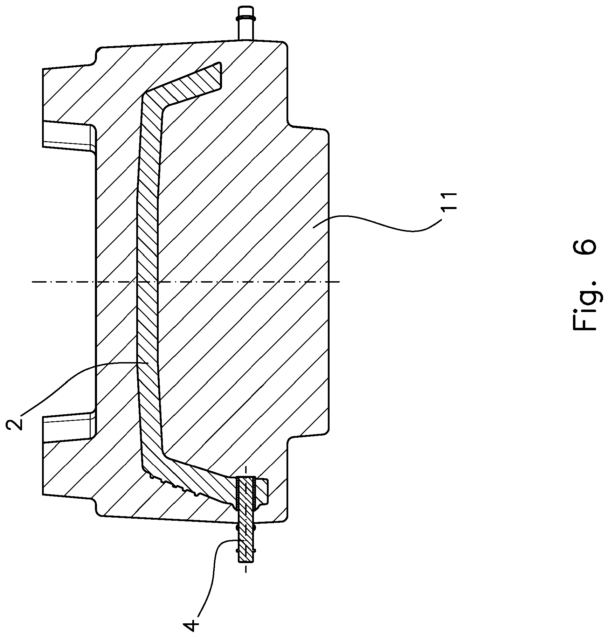

Die Fig. 6 zeigt den Sandkern 11, in dem das erste Teil 2 und das Verbindungselement 4 angeordnet sind, nachdem der Sandkern 11 aus dem Kernkasten 10 entnommen wurde.

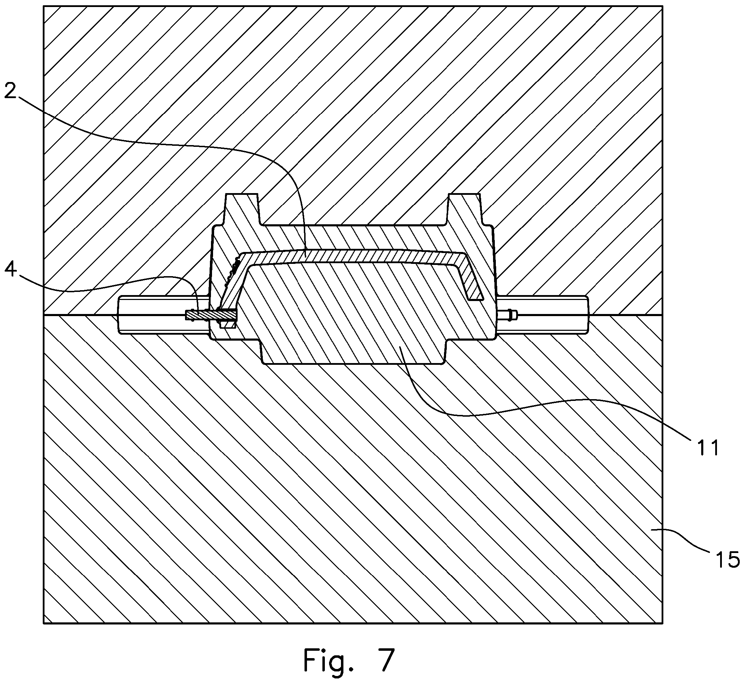

Anschließend wird der Sandkern 11 mit integriertem ersten Teil 2 in eine Sandform 15 eingelegt (Fig. 7). Die Sandform 15 bildet eine Gussform für das nun herzustellende zweite Teil 3 bzw. den Reibring einer Verbund bremsscheibe.

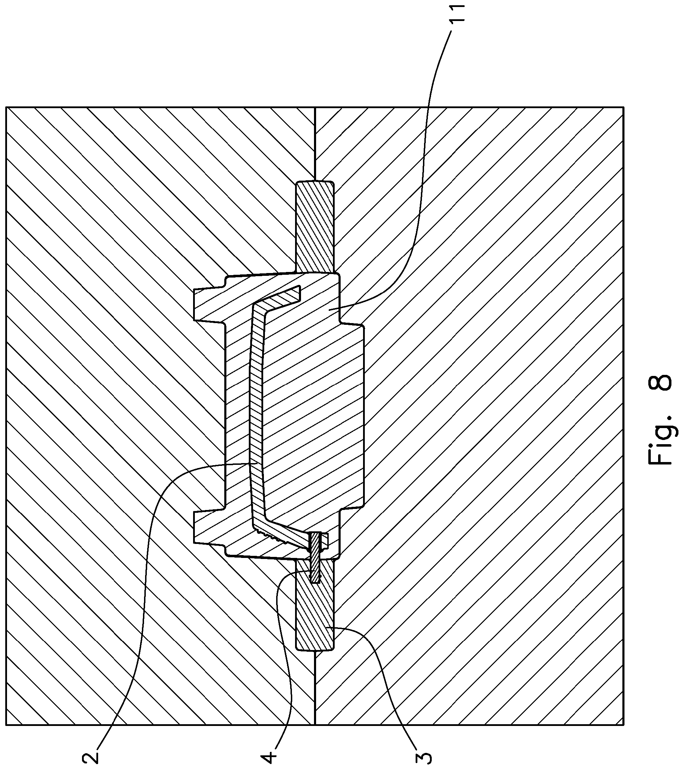

Ausweislich der Fig. 8 werden die Hohlräume in der Sandform 15 mit dem zweiten Material, welches einen höheren Schmelzpunkt aufweist als das erste Material, gefüllt, um dadurch das zweite Teil 3 auszubilden. Ehe oder während das zweite Material eingebracht wird, kann das Verbindungselement 4 erwärmt werden, insbesondere induktiv erwärmt werden.

Anschließend können die Sandform 15 und der Sandkern 11 entfernt werden. Übrig bleibt das fertig hergestellte Verbundgussteil 1, insbesondere die Verbundbremsscheibe.

## Patentansprüche

1. Verfahren zur Herstellung eines Verbundgussteils (1) mit den Verfahrensschritten:
a. Herstellung eines ersten Teils (2) aus einem Werkstoff mit einem ersten Schmelzpunkt,
b. An- oder Einbringen von zumindest einem Verbindungselement (4) an dem ersten Teil (2),
c. wenigstens teilweise Umgießen oder Füllen des zumindest einen Verbindungselements (4) mit einem zweiten Werkstoff, der einen höheren Schmelzpunkt aufweist als der erste Werkstoff, in einem fluiden, insbesondere flüssigen, Zustand, um ein mit dem ersten Teil (2) über das zumindest eine Verbindungselement (4) verbundenes zweites Teil (3) auszubilden, **dadurch gekennzeichnet, dass**
d. das zumindest eine Verbindungselement (4) erwärmt wird, ehe Schritt 1.c. durchgeführt wird.

2. Verfahren nach Anspruch 1, **dadurch gekennzeichnet, dass** das erste Teil (2) durch Gießen, insbesondere Pressgießen, Warmpressen oder Stanzen hergestellt wird.

3. Verfahren nach einem der vorhergehenden Ansprüche, **dadurch gekennzeichnet, dass** in dem ersten Teil (2) zumindest eine Öffnung (6) erzeugt wird und das Verbindungselement (4) in die Öffnung (6) eingesteckt wird.

4. Verfahren nach Anspruch 3, **dadurch gekennzeichnet, dass** zunächst eine Hülse (5) in die Öffnung (6) eingesteckt wird und anschließend das Verbindungselement (4) in die Hülse (5) eingesteckt wird.

5. Verfahren nach einem der vorhergehenden Ansprüche 3 oder 4, **dadurch gekennzeichnet, dass** das Einstecken des Verbindungselements (4) und/oder der Hülse (5) unter Erwärmung des ersten Teils (2) erfolgt.

6. Verfahren nach Anspruch 1 oder 2, **dadurch gekennzeichnet, dass** das Verbindungselement (4) zumindest teilweise in das erste Teil (2) eingegossen wird.

7. Verfahren nach einem der vorhergehenden Ansprüche, **dadurch gekennzeichnet, dass** das Verbindungselement (4) aus einem dritten Material hergestellt ist, das einen höheren Schmelzpunkt als das erste und das zweite Material aufweist.

8. Verbundbremsscheibe mit einem ersten als Bremstopf ausgebildeten Teil (2) aus einem ersten Material und einem zweiten als Reibring ausgebildeten Teil (3) aus einem zweiten Material, wobei das zweite Teil über zumindest ein Verbindungselement (4) mit dem ersten Teil verbunden ist, wobei der Schmelzpunkt des zweiten Materials höher ist als der des ersten Materials und das Verbindungselement (4) formschlüssig mit dem zweiten Teil (3) verbunden ist, **dadurch gekennzeichnet, dass** das Verbindungselement (4) verschiebbar am ersten Teil (2) angeordnet ist.

9. Verbundbremsscheibe nach Anspruch 8, **dadurch gekennzeichnet, dass** das Verbindungselement (4) aus einem dritten Material hergestellt ist, dass einen höheren Schmelzpunkt als das zweite Material aufweist.

10. Verbundbremsscheibe nach einem der vorhergehenden Ansprüche 8 oder 9, **dadurch gekennzeichnet, dass** in dem ersten Teil (2) eine Hülse (5) angeordnet ist, in die das Verbindungselement (4) eingesteckt ist.

11. Verbundbremsscheibe nach einem der vorhergehenden Ansprüche 8 bis 10, **dadurch gekennzeichnet, dass** das Verbindungselement (4) eine Formschlusskontur (7) aufweist, die von dem zweiten Teil (3) zumindest teilweise hintergriffen ist.

12. Verbundbremsscheibe nach einem der Ansprüche 8 bis 11, **dadurch gekennzeichnet, dass** die Verbundbremsscheibe, insbesondere das erste Teil (2), ein weiteres Anbauteil, insbesondere einen Handbremsring, aufweist.

## Claims

1. Method for producing a compound casting (1), comprising the method steps of:
a. producing a first part (2) from a material having a first melting point,
b. applying or introducing at least one connecting element (4) to the first part (2),
c. at least partially recasting or filling of the at least one connecting element (4) with a second material, which has a higher melting point than the first material, in a fluid, in particular liquid, state, in order to form a second part (3) connected to the first part (2) via the at least one connecting element (4), **characterized in that**
d. the at least one connecting element (4) is heated before step 1.c. is carried out.

2. Method according to claim 1, **characterized in that** the first part (2) is produced by casting, in particular compression casting, hot pressing or stamping.

3. Method according to either of the preceding claims, **characterized in that** at least one opening (6) is produced in the first part (2) and the connecting element (4) is inserted into the opening (6).

4. Method according to claim 3, **characterized in that** first a sleeve (5) is inserted into the opening (6) and then the connecting element (4) is inserted into the sleeve (5).

5. Method according to either of the preceding claims 3 or 4, **characterized in that** the connecting element (4) and/or the sleeve (5) is inserted while the first part (2) is heated.

6. Method according to either claim 1 or claim 2, **characterized in that** the connecting element (4) is at least partially poured into the first part (2).

7. Method according to any of the preceding claims, **characterized in that** the connecting element (4) is made of a third material which has a higher melting point than the first and second materials.

8. Composite brake disk having a first part (2) designed as a brake cup made of a first material and a second part (3) designed as a friction ring made of a second material, the second part being connected to the first part via at least one connecting element (4), the melting point of the second material being higher than that of the first material and the connecting element (4) being form-fittingly connected to the second part (3), **characterized in that** the connecting element (4) is arranged displaceably on the first part (2).

9. Composite brake disk according to claim 8, **characterized in that** the connecting element (4) is made from a third material which has a higher melting point than the second material.

10. Composite brake disk according to either of the preceding claims 8 or 9, **characterized in that** a sleeve (5) is arranged in the first part (2), into which sleeve the connecting element (4) is inserted.

11. Composite brake disk according to any of the preceding claims 8 to 10, **characterized in that** the connecting element (4) has a form-fitting contour (7) which is at least partially engaged from behind by the second part (3).

12. Composite brake disk according to any of claims 8 to 11, **characterized in that** the composite brake disk, in particular the first part (2), comprises a further add-on part, in particular a handbrake ring.

## Revendications

1. Procédé destiné à la fabrication d'une pièce moulée composite (1), comportant les étapes de procédé :
a. de fabrication d'une première pièce (2) à partir d'un matériau avec un premier point de fusion,
b. de fixation ou d'introduction d'au moins un élément de liaison (4) sur la première partie (2),
c. d'enrobage ou de remplissage au moins partiel de l'au moins un élément de liaison (4) avec un deuxième matériau, lequel présente un point de fusion plus élevé que le premier matériau, dans un état fluide, en particulier liquide, afin de former une seconde partie (3) reliée à la première partie (2) par l'intermédiaire de l'au moins un élément de liaison (4), **caractérisé en ce que**
d. l'au moins un élément de liaison (4) est chauffé avant que l'étape 1.c. ne soit mise en œuvre.

2. Procédé selon la revendication 1, **caractérisé en ce que** la première pièce (2) est réalisée par coulée, en particulier par coulée sous pression, pressage à chaud ou emboutissage.

3. Procédé selon l'une des revendications précédentes, **caractérisé en ce qu'**au moins une ouverture (6) est réalisée dans la première partie (2) et l'élément de liaison (4) est inséré dans l'ouverture (6).

4. Procédé selon la revendication 3, **caractérisé en ce qu'**un manchon (5) est d'abord inséré dans l'ouverture (6) et ensuite l'élément de liaison (4) est inséré dans le manchon (5).

5. Procédé selon l'une des revendications 3 ou 4 précédentes, **caractérisé en ce que** l'insertion de l'élément de liaison (4) et/ou du manchon s'effectue en chauffant la première partie (2).

6. Procédé selon la revendication 1 ou 2, **caractérisé en ce que** l'élément de liaison (4) est moulé au moins partiellement dans la première pièce (2).

7. Procédé selon l'une des revendications précédentes, **caractérisé en ce que** l'élément de liaison (4) est fabriqué à partir d'un troisième matériau, lequel présente un point de fusion plus élevé que le premier et le deuxième matériau.

8. Disque de frein composite comportant une première partie (2) conçue comme un pot de frein en un premier matériau et une seconde partie (3) conçue comme un anneau de friction en un deuxième matériau, la seconde partie étant reliée à la première partie par l'intermédiaire d'au moins un élément de liaison (4), le point de fusion du deuxième matériau étant supérieur à celui du premier matériau et l'élément de liaison (4) étant relié par complémentarité de forme à la seconde partie (3), **caractérisé en ce que** l'élément de liaison (4) est disposé de manière à pouvoir être déplacé sur la première partie (2).

9. Disque de frein composite selon la revendication 8, **caractérisé en ce que** l'élément de liaison (4) est fabriqué à partir d'un troisième matériau, lequel présente un point de fusion plus élevé que le deuxième matériau.

10. Disque de frein composite selon l'une des revendications 8 ou 9 précédentes, **caractérisé en ce qu'**un manchon (5), dans lequel est inséré l'élément de liaison (4), est disposé dans la première partie (2).

11. Disque de frein composite selon l'une des revendications 8 à 10 précédentes, **caractérisé en ce que** l'élément de liaison (4) présente un contour de forme complémentaire (7) qui vient en prise par derrière au moins partiellement dans la seconde partie (3).

12. Disque de frein composite selon l'une des revendications 8 à 11, **caractérisé en ce que** le disque de frein composite, en particulier la première pièce (2), présente une pièce rapportée supplémentaire, en particulier un anneau de frein à main.
